Europäisches Patentamt

European Patent Office

Office européen des brevets

(11) Numéro de publication: **0 247 919**
**A1**

## (12) DEMANDE DE BREVET EUROPEEN

(21) Numéro de dépôt: 87401028.3

(22) Date de dépôt: 06.05.87

(51) Int. Cl.⁴: **B 62 D 53/08**

(30) Priorité: 09.05.86 FR 8606956

(43) Date de publication de la demande:
02.12.87 Bulletin 87/49

(84) Etats contractants désignés:
BE DE ES GB IT NL

(71) Demandeur: **FRUEHAUF FRANCE S.A.**
**2 avenue de l'Aunette**
**F-91130 Ris Orangis (FR)**

(72) Inventeur: **Rollet, Jean**
**2, Rue Jean bart**
**F-89000 Auxerre (FR)**

(74) Mandataire: **Boivin, Claude**
**9, rue Edouard-Charton**
**F-78000 Versailles (FR)**

(54) Dispositif d'attelage entre un véhicule tracteur et un véhicule tracté.

(57) Dispositif entre un véhicule tracteur et un véhicule tracté comprenant, dans le cas d'une semi-remorque, la cheville ouvrière (3) portée par une plaque d'attelage (5) montée coulissante longitudinalement par rapport au châssis de la semi-remorque et portant un coin d'ancrage (10) bloqué entre les becs de la sellette d'attelage (4) solidaire du tracteur; l'un des éléments constitués par la plaque d'attelage (5) et le châssis de la semi-remorque (1) porte l'un un galet (8 ou 8a) et l'autre une rampe (9 ou 9a) dans laquelle le galet est guidé et qui est conformée de manière à entraîner lors d'un virage un déplacement de la cheville ouvrière (3) vers l'avant; dans le cas d'une remorque le timon (13) de celle-ci est monté coulissant longitudinalement par rapport à l'avant-train et l'un des éléments constitués par le timon (13) et le châssis de la remorque porte l'un un galet (15 ou 15a) et l'autre une rampe (16 ou 16a) dans laquelle le galet est guidé et qui est conformée de manière à entraîner lors d'un virage un déplacement du timon (13) vers l'avant.

FIG.2

EP 0 247 919 A1

Bundesdruckerei Berlin

**Description**

Dispositif d'attelage entre un véhicule tracteur et un véhicule tracté.

On cherche de plus en plus à augmenter le volume utile des véhicules de transport routier, en particulier leur longueur; mais le code de la route limite leur allongement.

Les ensembles articulés comprenant un tracteur et une semi-remorque ou une remorque sont souvent utilisés comme véhicules de transport. Mais ils présentent une perte de longueur utile car un certain espace doit être laissé entre deux éléments adjacents de l'ensemble afin de permettre le débattement des carrosseries dans les virages.

En général, une semi-remorque est attelée au tracteur par une cheville ouvrière engagée et verrouillée dans une sellette d'attelage portée par le bâti de ce tracteur.

La présente invention a pour objet un dispositif d'attelage entre un véhicule tracteur et un véhicule tracté, semi-remorque ou remorque, grâce auquel l'écart entre les deux véhicules peut être particulièrement réduit en ligne droite, ce qui augmente la longueur utile.

Le dispositif d'attelage selon l'invention est caractérisé en ce que, dans le cas d'une semi-remorque, la cheville ouvrière est portée par une plaque d'attelage qui est montée coulissante longitudinalement par rapport au châssis de la semi-remorque et porte un coin d'ancrage bloqué entre les becs de la sellette d'attelage solidaire du tracteur et en ce que l'un des éléments constitué par la plaque d'attelage et le châssis de la semi-remorque porte l'un un galet et l'autre une rampe dans laquelle le galet est guidé et qui est conformée de manière à entraîner lors d'un virage un déplacement vers l'avant de la cheville ouvrière, et en ce que dans le cas d'une remorque le timon de celle-ci est monté coulissant longitudinalement par rapport à l'avant-train et en ce que l'un des éléments constitués par le timon et le châssis de la remorque porte l'un un galet et l'autre une rampe dans laquelle le galet est guidé et qui est conformée de manière à entraîner lors d'un virage un déplacement du timon vers l'avant.

On a décrit ci-après, à titre d'exemples non limitatifs, divers modes de réalisation du dispositif d'attelage selon l'invention, avec référence aux dessins annexés dans lesquels :

La Figure 1 montre schématiquement en élévation un tracteur et une semi-remorque munis du dispositif d'attelage selon l'invention;

La Figure 2 est une vue en plan du dispositif d'attelage dans un premier mode de réalisation;

La Figure 3 en est une coupe longitudinale suivant III-III de la Figure 2;

La Figure 4 en est une coupe transversale suivant IV-IV de la Figure 2;

La Figure 5 en est une vue semblable à la Figure 2 d'un second mode de réalisation;

La Figure 6 en est une coupe longitudinale suivant VI-VI de la Figure 5;

La Figure 7 en est une coupe transversale suivant VII-VII de la Figure 5;

La Figure 8 est une vue en plan d'un dispositif d'attelage reliant une remorque et un tracteur;

La Figure 9 est une vue en coupe transversale suivant IX-IX de la Figure 8;

La Figure 10 montre la forme de la rampe lorsqu' elle est prévue sur l'avant-train de la remorque.

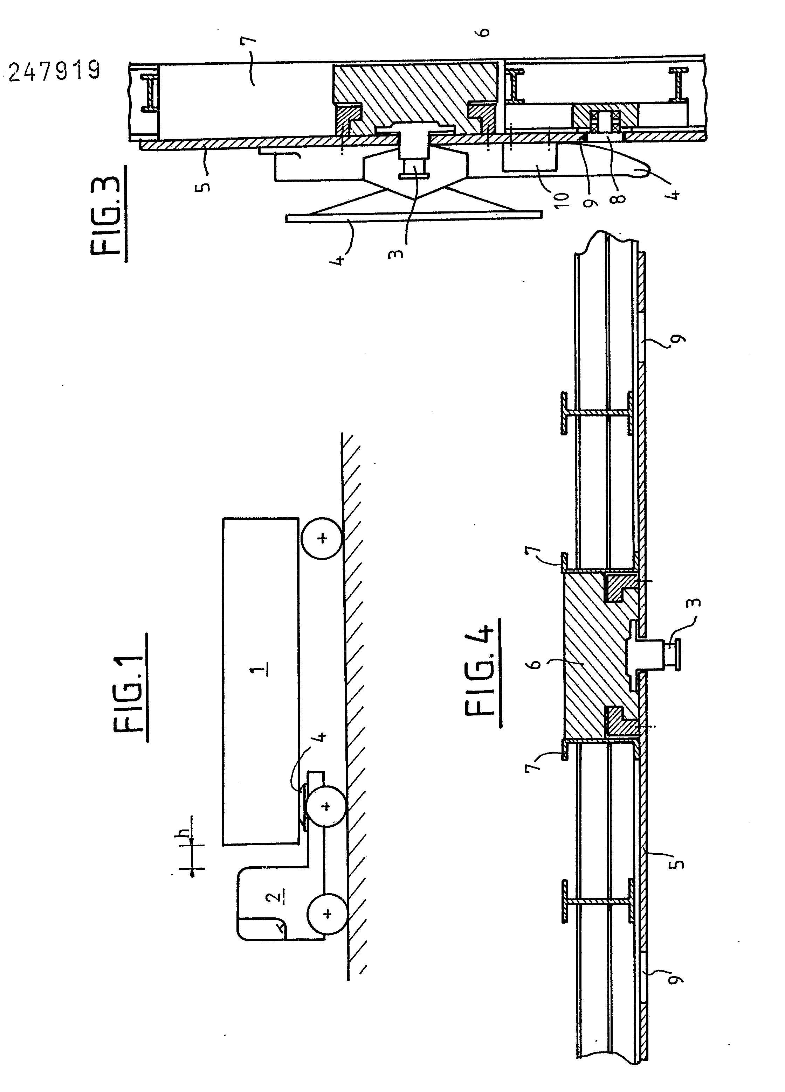

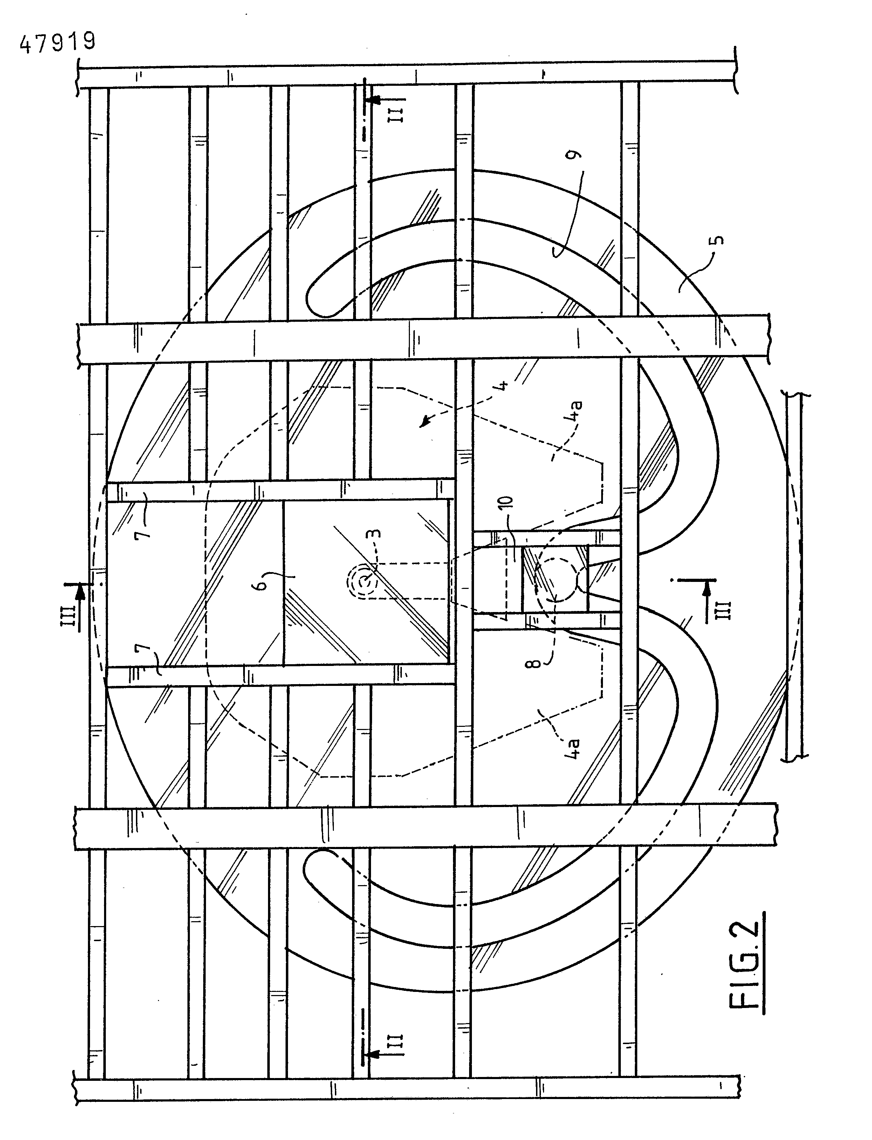

À la Figure 1, on voit en 1 la caisse d'une semi-remorque qui est attelée à un tracteur 2. Cet attelage est réalisé de la manière usuelle par l'intermédiaire d'une cheville ouvrière 3 qui vient s'engager dans une sellette d'attelage 4 solidaire du tracteur 2.

La cheville ouvrière 3 est ancrée à une plaque d'attelage 5 qui est fixée à un bâti 6. Celui-ci est monté coulissant entre deux longeronnets 7 faisant partie du châssis de la caisse 1. Ce châssis porte un galet 8 dont l'axe fixe est situé à l'arrière de la cheville ouvrière 3 (dans le sens d'avancement du véhicule); ce galet est engagé dans une rampe 9 ménagée dans la plaque d'attelage 5 et sensiblement en forme de cycloïde.

Cette plaque 5 comporte un coin d'ancrage qui est bloqué entre les deux becs 4a de la sellette d'attelage 4. Lorsque, dans un virage, la semi-remorque 1 tourne par rapport au tracteur, le coin d'ancrage entraîne la plaque d'attelage 5 et la fait tourner par rapport au châssis de la semi-remorque 1. Le galet 8 engagé dans la rampe 9 provoque un déplacement vers l'avant de l'ensemble formé par le bâti 6, la plaque d'atte lage 5 et la cheville ouvrière 3, donc une réduction du porte-à-faux avant. Cette réduction de porte-à-faux autorise le débattement de l'avant de la semi-remorque 1 par rapport à la cabine du tracteur 2 bien qu'en ligne droite la distance $h$ entre ces deux éléments soit réduite.

Le galet 8 pourrait avoir son axe situé vers l'avant par rapport à la cheville ouvrière 3, auquel cas la rampe 9 aurait sensiblement la forme d'un "V".

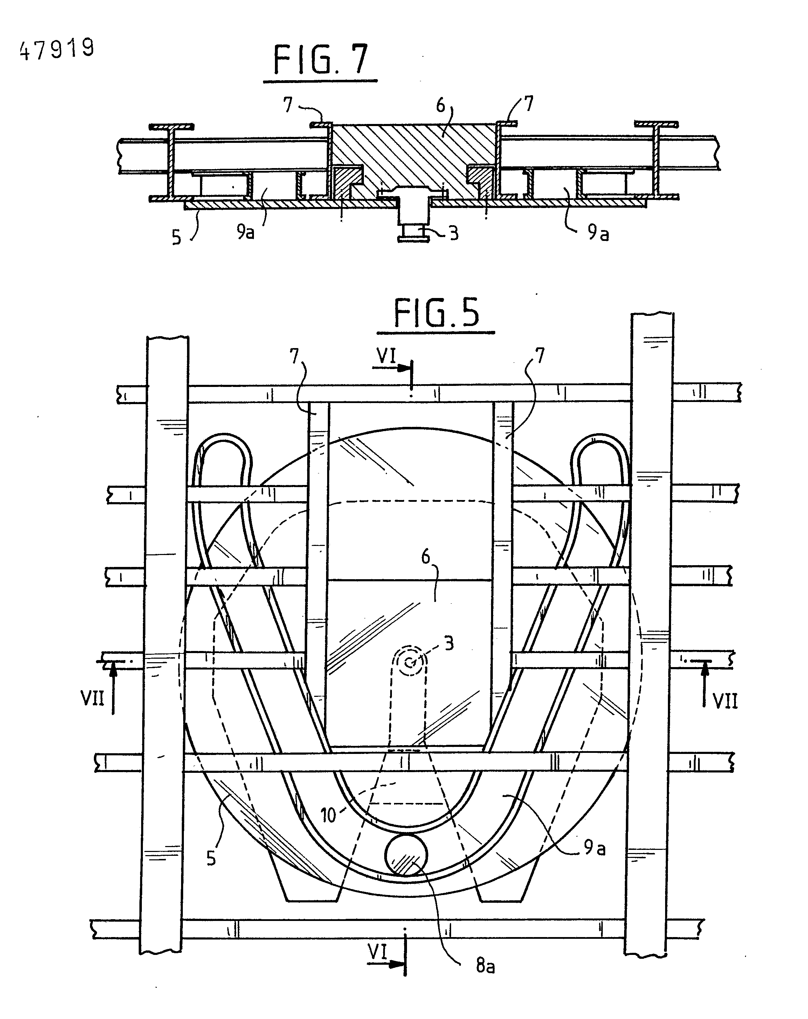

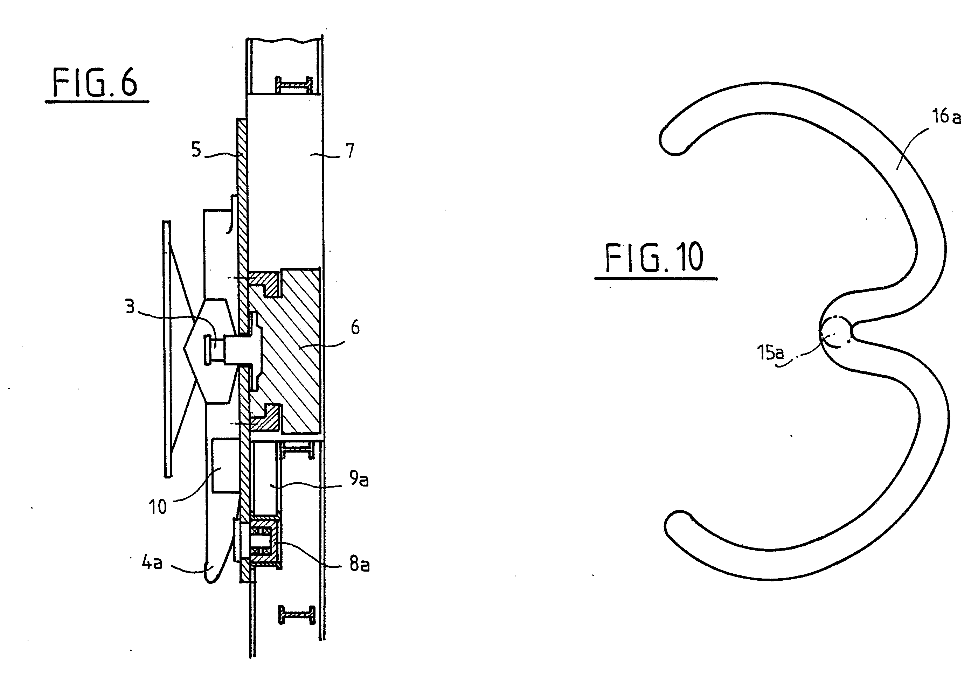

Dans le mode de réalisation des Figures 5 à 7, la plaque d'attelage 5 porte un galet 8a dont l'axe est situé à l'arrière par rapport à la cheville ouvrière 3; ce galet est engagé dans une rampe 9a qui est en forme de V et solidaire du châssis de la semi-remorque 1; comme dans le mode de réalisation précédent, lors d'un virage, l'ensemble formé par le bâti 6, la plaque d'attelage 5 et la cheville ouvrière 3 se déplace vers l'avant, ce qui provoque une réduction du porte-à-faux avant.

Si le galet 8a avait son axe situé vers l'avant par rapport à la cheville ouvrière 3, la rampe 9a devrait avoir la forme d'un cycloïde, comme à la Figure 2.

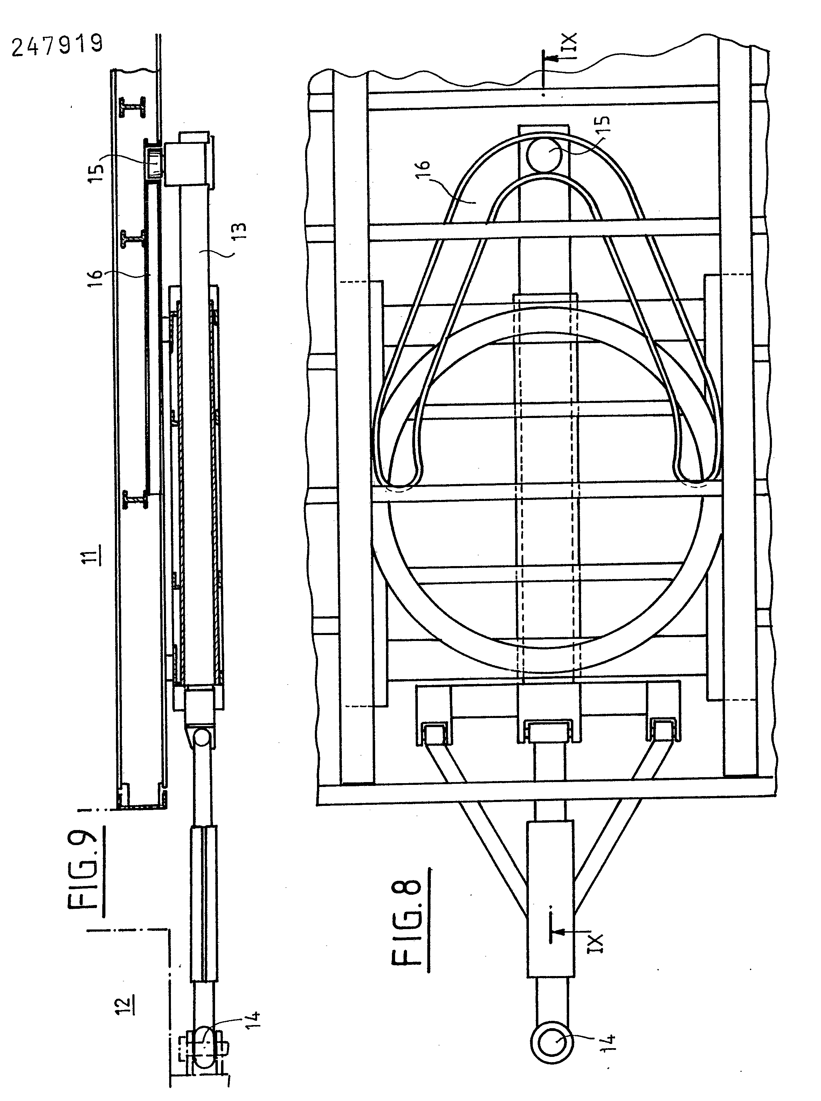

Aux Figures 8 et 9, on voit une semi-remorque 11 pouvant être attelée à un véhicule tracteur 12. La remorque comporte un avant-train pivotant par rapport auquel peut coulisser longitudinalement un timon 13 terminé à son extrémité par un anneau 14.

Le timon porte à son extrémité arrière un galet 15 qui est guidé dans une rampe 16 en V solidaire de la remorque 11. Dans un virage, l'avant-train de la remorque pivote et le galet 15 fait déplacer le timon 13 vers l'avant, ce qui augmente la distance entre les carrosseries.

En variante, le galet 15a pourrait être porté par la remorque et engagé dans une rampe 16a portée par l'avant-train; dans ce cas, la rampe 16a devrait avoir la forme d'un cycloïde, comme le montre la Figure 10.

Dans le mode de réalisation des Figures 8 et 10, le galet 15 ou 15a est situé derrière l'axe de pivotement de l'avant-train. Mais il pourrait aussi être disposé devant cet axe, auquel cas la rampe devrait avoir une forme de cycloïde si elle est solidaire de la remorque ou d'un V si elle est solidaire de l'avant-train.

Il va de soi que la présente invention ne doit pas être considérée comme limitée aux divers modes de réalisation décrits et représentés, mais en couvre, au contraire, toutes les variantes.

**Revendications**

1. Dispositif d'attelage entre un véhicule tracteur et un véhicule tracté,
caractérisé en ce que, dans le cas d'une semi-remorque, la cheville ouvrière (3) est portée par une plaque d'attelage (5) qui est montée coulissante longitudinalement par rapport au châssis de la semi-remorque et porte un coin d'ancrage (10) bloqué entre les becs de la sellette d'attelage (4) solidaire du tracteur et en ce que l'un des éléments constitué par la plaque d'attelage (5) et le châssis de la semi-remorque (1) porte l'un un galet (8 ou 8a) et l'autre une rampe (9 ou 9a) dans laquelle le galet est guidé et qui est conformée de manière à entraîner lors d'un virage un déplacement de la cheville ouvrière (3) vers l'avant, et en ce que dans le cas d'une remorque le timon (13) de celle-ci est monté coulissant longitudinalement par rapport à l'avant-train et en ce que l'un des éléments constitués par le timon (13) et le châssis de la remorque porte l'un un galet (15 ou 15a) et l'autre une rampe (16 ou 16a) dans laquelle le galet est guidé et qui est conformée de manière à entraîner lors d'un virage un déplacement du timon (13) vers l'avant.

2. Dispositif selon la revendication 1,
caractérisé en ce que la rampe (9 ou 16a) a la forme d'un cycloïde.

3. Dispositif selon la revendication 1,
caractérisé en ce que la rampe (9a ou 16a) a la forme d'un V.

FIG.1

FIG.3

FIG.4

47919

III

7 7

6

II II

3

4

10

8 4a

4a

9

4a

5

III

III

FIG.2

47919

## FIG. 7

## FIG.5

## FIG.6

5
7

3

6

10

9a

4a

8a

## FIG.10

16a

15a

247919

FIG.9

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 514 894  (SCHWARZMÜLLER) <br> * Revendication  1; page 7; figures 1-3 * | 1,2 | B 62 D   53/08 |
| A | FR-A-2 553 053  (FRUEHAUF FRANCE S.A.) <br> *  Abrégé;  page  1,  lignes 5-10,26-34;  page 2, lignes 9-40; revendication 1 * | 1-3 | |
| A | US-A-4 359 234  (MITTELSTADT) <br> * Abrégé; figures 1-7; colonne 2, lignes 1-19,64 - colonne 5, ligne 65 * | 1-3 | |
| A | US-A-3 129 018  (COLPO) <br> * En entier; en particulier figures 2,3 * | 1,2 | |

DOMAINES TECHNIQUES
RECHERCHES (Int. Cl.4)

B 62 D

Le présent rapport de recherche a été établi pour toutes les revendications

| Lieu de la recherche | Date d'achèvement de la recherche | Examinateur |
|---|---|---|
| LA HAYE | 31-07-1987 | SCHMAL R. |